# FASCICULE DE BREVET EUROPEEN

(11) **EP 1 932 160 B1**
(45) Date de publication et mention de la délivrance du brevet: **11.11.2009**
(21) Numéro de dépôt: 06808082.9
(22) Date de dépôt: 06.09.2006
(51) Int. Cl.: G21C 5/10

(54) **PROCEDE DE REPARATION DES GLISSIERES D'UN ENSEMBLE DE MAINTIEN RADIAL D'UNE PLAQUE DE SUPPORT DE COEUR D'UN REACTEUR NUCLEAIRE A EAU PRESSURISEE**
VERFAHREN ZUM REPARIEREN VON FÜHRUNGSSCHIENEN EINER BAUGRUPPE ZUM RADIALEN AUFRECHTERHALTEN EINER TRÄGERPLATTE EINES DRUCKWASSER-KERNREAKTORKERNS
METHOD FOR REPAIRING GUIDE RAILS OF AN ASSEMBLY RADIALLY MAINTAINING A SUPPORT PLATE OF A PRESSURIZED WATER NUCLEAR REACTOR CORE

(30) Priorité: 04.10.2005 FR 0510141
(43) Date de publication de la demande: 18.06.2008
(73) Titulaire: Areva NP, 92400 Courbevoie (FR)
(72) Inventeur: GUIRONNET, Stéphane, F-69009 Lyon (FR); GRYPCZYNSKI, Daniel, F-69006 Lyon (FR); FABRIS, Mirco, F-95280 Jouy Le Moutier (FR)
(74) Mandataire: Blot, Philippe Robert Emile
(86) Numéro de dépôt international: PCT/FR2006/002055
(87) Numéro de publication internationale: WO 2007/042630

(56) Documents cités:
- FR-A- 2 717 608
- US-A- 4 707 325
- US-A- 5 864 594

## Description

La présente invention concerne un procédé de réparation des glissières d'un ensemble de maintien radial d'une plaque de support de coeur d'un réacteur nucléaire à eau pressurisée.

Les réacteurs nucléaires à eau pressurisée comportent une cuve dont l'enveloppe de forme générale cylindrique est disposée avec son axe vertical dans la position de service de la cuve et qui est fermée par un fond bombé à son extrémité inférieure.

Le coeur du réacteur constitué par des assemblages combustibles juxtaposés est placé à l'intérieur de la cuve dans laquelle circule, pendant le fonctionnement du réacteur nucléaire, le fluide, de refroidissement du réacteur qui vient en contact avec les assemblages du coeur pour assurer leur refroidissement et le transport de la chaleur produite par le coeur.

La cuve du réacteur nucléaire renferme des équipements internes appelés notamment équipements internes inférieurs qui sont destinés à assurer le support et le maintien des assemblages du coeur à l'intérieur de la cuve.

Ces équipements internes inférieurs comportent en particulier une enveloppe cylindrique disposée de manière coaxiale par rapport à la cuve et une plaque de support de coeur de forte épaisseur solidaire de l'extrémité inférieure de l'enveloppe.

L'enveloppe du coeur est suspendue à l'intérieur de la cuve par sa partie supérieure et renferme un cloisonnement fixé sur la surface intérieure de l'enveloppe de coeur permettant de maintenir les assemblages combustibles qui reposent par leur partie inférieure sur une plaque inférieure de support de coeur.

Afin d'éviter des déplacements des équipements internes inférieurs suspendus par l'enveloppe de coeur à l'intérieur de la cuve du réacteur, on utilise des dispositifs de maintien de ces équipements internes permettant d'empêcher ou de limiter à une valeur très faible les déplacements de la partie inférieure des équipements internes dans des directions radiales et tangentielles.

Le maintien radial et tangentiel des équipements internes inférieurs est assuré par des clavettes qui limitent les déplacements en rotation des équipements internes inférieurs à une valeur très faible et qui empêchent le basculement de l'extrémité inférieure de ces équipements internes.

Le maintien radial et tangentiel est obtenu au moyen de plusieurs ensembles identiques comprenant chacun une clavette fixée en saillie par rapport à la partie périphérique de la plaque de support de coeur et une partie femelle fixée sur la cuve et destinée à recevoir avec un certain jeu, une languette en saillie vers l'extérieur de la clavette. La partie femelle comprend elle-même une pièce massive soudée sur la paroi interne de la cuve et des glissières de maintien radial et tangentiel de la clavette fixée sur la plaque de support de coeur.

Le dispositif de maintien radial et tangentiel autorise les déplacements verticaux des équipements internes inférieurs à l'intérieur de la cuve et en particulier des déplacements verticaux de la partie inférieure des équipements internes dus à des dilatations ou des retraits lors d'une mise en température ou d'un refroidissement du réacteur nucléaire.

Ainsi, le rôle du dispositif de maintien radial inférieur est d'assurer le centrage et le positionnement angulaire des équipements internes inférieurs dans la cuve et de limiter le débattement horizontal des équipements internes inférieurs par rapport à cette cuve.

Pour cela, chaque glissière présente une section U et est fixée dans un logement ménagé dans un support massif solidaire de la cuve du réacteur et comportant deux branches latérales sensiblement parallèles et munies de portées en vis à vis destinées à coopérer avec les faces latérales d'une clavette correspondante de maintien radial, fixée sur la plaque de support de coeur.

Les surfaces en regard respectivement des glissières et des clavettes sont rechargées en stellite, alliage généralement à base de cobalt, de chrome, de tungstène et de molybdène. Cet alliage est utilisé pour sa résistance à l'usure et à sa tenue à chaud.

Si le jeu au niveau du guidage entre les glissières et les clavettes du dispositif de maintien radial inférieur est nul, ce guidage ne vibre pas et il ne se produit donc pas d'usure.

Si le jeu au niveau de ce guidage est très grand, il ne se produit pas non plus d'usure car le guidage ne vibre pas étant donné que les surfaces en vis à vis des glissières et des clavettes ne sont jamais en contact.

Entre ces deux cas extrêmes, il existe des situations dans lesquelles les surfaces en vis à vis des glissières et des clavettes viennent taper les unes contres les autres ce qui entraîne une usure au bout d'un certain temps de fonctionnement.

A partir d'un état supposé dégradé des portées d'une ou de plusieurs glissières, il faut procéder à leur réparation afin de se rapprocher de leur état initial.

Une des solutions envisagées pour remédier à cette usure, consiste en un rechargement par soudage ou par tout autre procédé thermique. En dehors des difficultés d'ordre métallurgique, il faut pouvoir garantir l'élimination complète du revêtement en stellite existant. Or, l'usinage en place et sous eau ne permet pas de pouvoir assurer la précision nécessaire.

Une autre solution envisagée réside dans une diminution par usinage de l'épaisseur des portées recouvertes de stellite afin de pouvoir monter des calles permettant de retrouver le jeu d'origine.

Mais, d'une manière générale, les différentes solutions envisagées ne permettent pas de pouvoir garantir un alignement axial entre les moyens de maintien fixés sur la paroi de la cuve et les moyens de maintien prévus sur la plaque de support de coeur lors de la remise en place de cette plaque de support de coeur.

L'invention a pour but de proposer un procédé de réparation qui évite les inconvénients précédemment mentionnés et qui est compatible avec les montages sous eau et en milieu irradié.

L'invention a donc pour objet un procédé de réparation des glissières d'un ensemble de maintien radial d'une plaque de support de coeur d'un réacteur nucléaire à eau pressurisée, chaque glissière de section en U étant fixée dans un logement ménagé dans un support massif solidaire de la cuve du réacteur et comportant deux branches latérales sensiblement parallèles et munies de portées en vis à vis destinées à coopérer avec les faces latérales d'une clavette de maintien radial, fixée sur la plaque de support de coeur, caractérisé en ce que :
- on mesure l'écartement entre les portées des branches latérales d'au moins un glissière à réparer,
- on effectue une mesure relative de la position de ladite au moins glissière à réparer par rapport aux autres glissières de l'ensemble de maintien,
- on coupe et on enlève au moins une branche latérale de ladite au moins glissière à réparer,
- on mesure la dimension de ladite au moins branche latérale et on usine à cotes identiques au moins une branche latérale de remplacement,
- on perce dans le support massif des trous débouchants destinés à recevoir des organes de vissage de ladite au moins branche latérale de remplacement,
- on perce des trous dans ladite au moins branche latérale de remplacement et on taraude ces trous pour les organes de vissage,
- on fixe ladite branche latérale de remplacement dans le logement du support massif par les organes de vissage,
- on mesure l'écartement entre les portées des branches latérales d'au moins une glissière réparée,
- on effectue une mesure relative de la positon de ladite au moins glissière réparée par rapport aux autres glissières de l'ensemble de maintien,
- on perce des trous dans le support massif et dans ladite au moins branche latérale de remplacement pour des broches de positionnement et de reprise d'effort, et
- on met en place lesdites broches.

Selon d'autres caractéristiques de l'invention :
- on coupe ladite au moins branche latérale dans l'angle de la section en U de la glissière à réparer,
- on coupe ladite au moins branche latérale par électroérosion,
- après le perçage des trous du support massif, on bride ladite branche latérale de remplacement dans le logement de ce support massif, on perce les trous destinés à recevoir les organes de vissage, on taraude ces trous et on fixe ladite branche latérale de remplacement par les organes de vissage,
- on effectue séparément les perçages des trous du support massif et des trous de ladite au moins branche latérale de remplacement pour les organes de vissage, on bride ladite branche latérale de remplacement dans le logement du support massif, on taraude ces trous et on fixe ladite branche latérale de remplacement par les organes de vissage,
- pour effectuer les mesures de l'écartement entre les portées de ladite au moins glissière à réparer et réparée et de la position de cette glissière avant et après son remplacement, on utilise un gabarit muni pour chacune des glissières de l'ensemble de maintien d'une clavette identique à la clavette de la plaque de support de coeur, et
- on équipe au moins une clavette du gabarit correspondant à une glissière à ne pas remplacer d'équipements de mise en position et de mesure de la position du gabarit par rapport à la cuve du réacteur.

L'invention sera mieux comprise à la lecture de la description qui va suivre, donnée à titre d'exemple et faite en référence aux dessins annexés, sur lesquels :
- la Fig. 1 est une vue en coupe axiale d'une cuve d'un réacteur nucléaire à eau pressurisée avec notamment les équipements internes et les moyens de maintien de ces équipements internes,
- la Fig. 2 est une vue à plus grande échelle et en coupe verticale d'un élément de l'ensemble de maintien radial de la plaque de support de coeur des équipements internes inférieurs de la cuve,
- la Fig. 3 est une vue en coupe selon la ligne 3-3 de la Fig. 2,
- la Fig. 4 est une vue en perspective d'une glissière à réparer de l'ensemble de maintien radial de la plaque de support de coeur,
- la Fig. 5 est une vue schématique de dessus d'un gabarit de mesure de différents paramètres pour le procédé de réparation, et
- les Figs. 6 à 8 sont des vues schématiques montrant les différentes étapes du procédé de réparation d'une glissière de l'ensemble de maintien radial de la plaque de support de coeur.

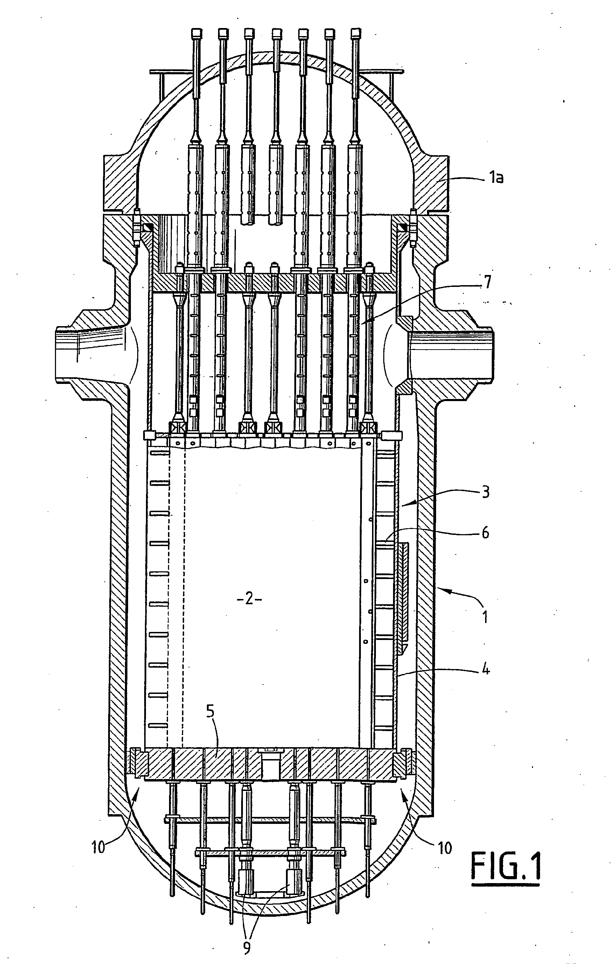

Sur la Fig. 1, on a représenté une cuve d'un réacteur nucléaire à eau pressurisée, désignée par la référence générale 1.

La cuve 1 est formée, de manière classique, par une enveloppe de forme générale cylindrique qui est disposée avec son axe vertical dans la position de service de la cuve représentée sur la Fig. 1. A l'intérieur de la cuve 1 est disposé le coeur 2 du réacteur nucléaire constitué par des assemblages de forme général prismatique disposés à l'intérieur des équipements internes appelés équipements internes inférieurs désignés de manière générale par la référence 3.

Les équipements internes inférieurs 3 comportent en particulier une enveloppe de coeur 4 de forme générale cylindrique qui est positionnée à l'intérieur de la cuve 1 dans une position coaxiale par rapport à cette cuve 1, et une plaque de support de coeur 5 solidaire de l'enveloppe de coeur 4 à sa partie inférieure.

L'enveloppe de coeur 4 renferme un cloisonnement 6 destiné à maintenir les assemblages à la périphérie du coeur 2, à l'intérieur de l'enveloppe de coeur 4.

La cuve 1 renferme également des équipements internes supérieurs 7 comportant en particulier une plaque supérieure de coeur 8 qui constitue la partie inférieure des équipements internes supérieurs 7 et qui vient reposer sur la partie supérieure des assemblages du coeur 2 par l'intermédiaire de ressorts, non représentés.

Les équipements internes supérieurs et les équipements internes inférieurs sont suspendus à l'intérieur de la cuve par leur partie supérieure qui est fixée sur la virole supérieure de cette cuve 1 légèrement au-dessous du plan de raccordement du couvercle 1a de ladite cuve 1.

Les équipements internes inférieurs sont, de plus, maintenus à leur partie inférieure, au niveau de la plaque de support de coeur 5, par un ensemble de maintien radial désigné par la référence générale 10. Par ailleurs, des colonnes de support 9 sont intercalées entre le fond de la cuve 1 et la plaque de support de coeur 5.

L'ensemble de maintien radial 10 est, dans l'exemple de réalisation représenté sur les figures, formé de quatre sous ensembles répartis autour de la plaque de support de coeur 5 pour assurer le maintien des équipements internes inférieurs 3 contre des déplacements en rotation autour de leur axe et contre un déplacement radial excessif de la plaque de support de coeur 5, dans des conditions accidentelles, tout en autorisant des déplacements relatifs de cette plaque de support de coeur 5 et de l'enveloppe de coeur 4 dans la direction axiale de la cuve 1, par exemple sous l'effet de dilatations différentielles.

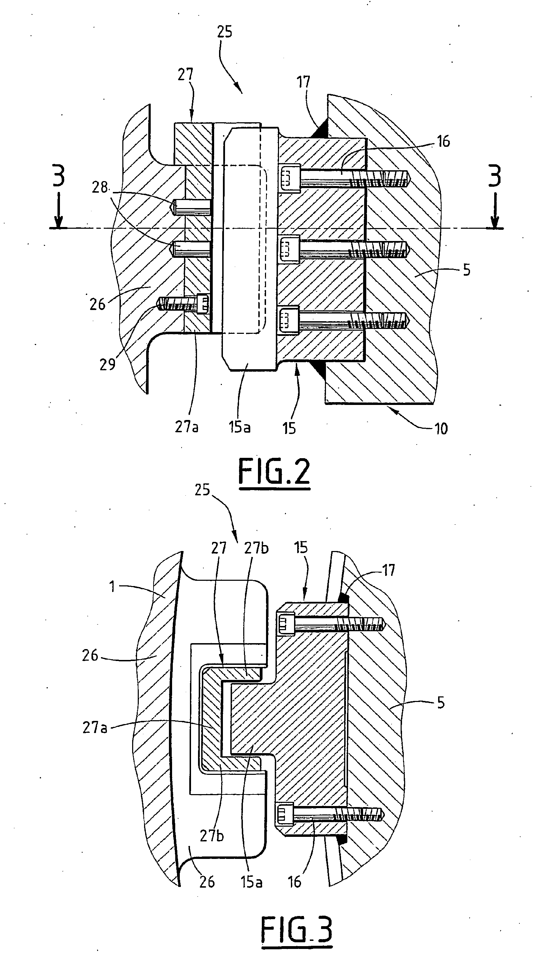

En se reportant maintenant aux Figs. 2 à 4, on va décrire un sous ensemble de l'ensemble de maintien radial 10, les autres sous ensembles étant identiques.

Chaque sous ensemble de l'ensemble de maintien radial 10 comporte une première partie mâle 15 ou clavette fixée sur le bord périphérique externe de la plaque de support de coeur 5 et une seconde partie femelle 25 fixée sur la surface intérieure de la paroi de la cuve 1, en vis à vis de la partie mâle 15.

La clavette 15 est fixée par des vis 16 et par des soudures 17, à l'intérieur d'un embrèvement plat usiné dans le bord périphérique externe de la plaque de support de coeur 5. La clavette 15 comporte, à son extrémité externe dirigée vers la surface intérieure de la paroi de la cuve 1, une languette 15a de forme sensiblement parallélépipédique dont l'axe longitudinal est dirigé suivant la direction verticale correspondant à l'axe de la cuve 1 et de l'enveloppe de coeur 4.

La partie femelle 25 comporte un support massif 26 fixé par soudures sur la surface intérieure de la cuve 1 et une glissière 27 en forme de U fixée par des pions de positionnement 28 et des vis 29 à l'intérieur d'un embrèvement de forme parallélépipédique usiné dans le support massif 26 également appelé support en M.

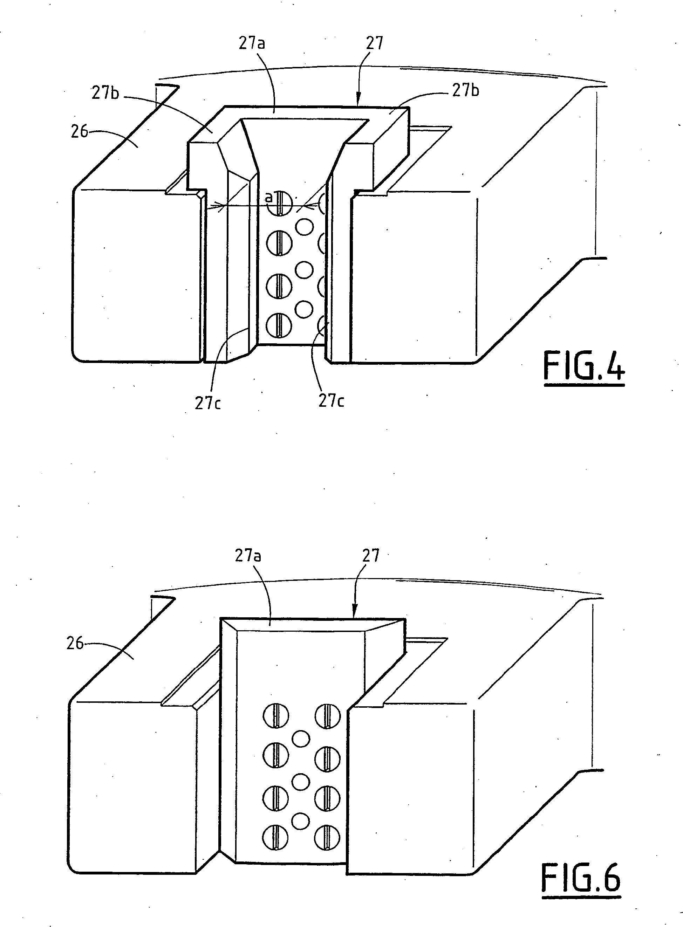

Ainsi que montré sur les Figs. 3 et 4, la glissière 27 en forme de U comporte une branche centrale 27a et deux branches latérales 27b munies chacune d'une portée 27c.

La languette 15a de la clavette 15 est reçue à l'intérieur des portées 27c des branches latérales 27b de la glissière 27 avec un faible jeu dans la direction circonférentielle et avec un jeu plus important dans la direction radiale.

Les faibles jeux circonférentiels permettent de maintenir la plaque support de coeur 5 et les équipements internes inférieurs 3 en les empêchant de tourner autour de leur axe, tout en permettant les déplacements longitudinaux nécessités par des dilatations différentielles entre les équipements internes inférieurs et la cuve. Le jeu radial permet de limiter les déplacements relatifs entre les équipements internes inférieurs 3 et la cuve 1 dans des conditions accidentelles, tout en évitant le coincement par dilatation radiale différentielle des équipements internes inférieurs 3 à l'intérieur de la cuve 1.

La clavette 15 est généralement réalisée en acier inoxydable et la glissière 27 est réalisée en alliage de nickel. Les surfaces en vis à vis de la languette 15 et de la glissière 27 peuvent être revêtues d'une couche de revêtement dur, par exemple en stellite.

Après un certain temps de fonctionnement du réacteur, il peut s'avérer qu'une ou les deux portées 27c d'une ou des deux branches latérales 27b d'une ou de plusieurs glissières 27 soient endommagées nécessitant, de ce fait, le remplacement d'une ou de plusieurs branches latérales 27b.

En se reportant maintenant aux Figs. 6 à 8, on va décrire le procédé de réparation de deux branches latérales 27b d'une glissière 27, le procédé de remplacement d'une branche latérale 27b d'une glissière 27 étant similaire.

Avant de procéder à la réparation des branches latérales 27b de la glissière 27, on procède à différentes mesures.

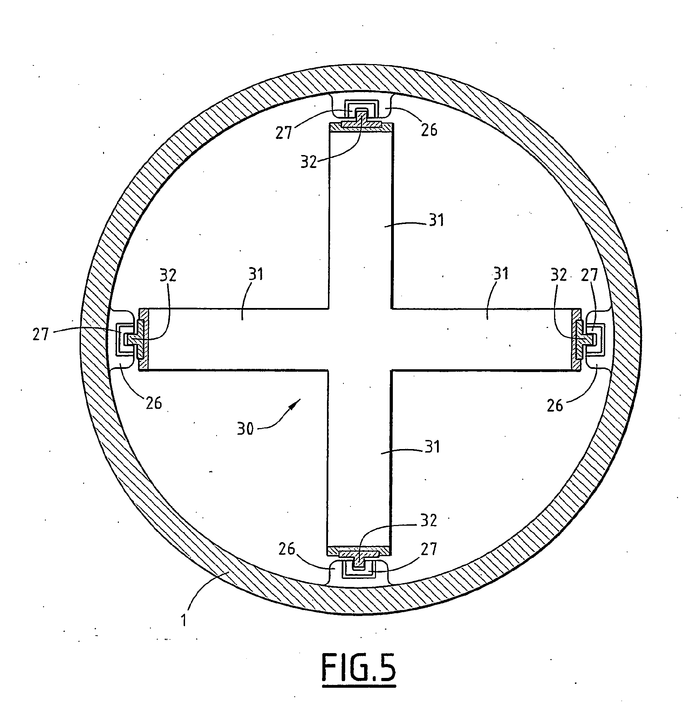

Selon un mode de réalisation préférentiel, ces mesures sont effectuées à l'aide d'outils de mesure adéquates et portés par un gabarit désigné par la référence 30, représenté à la Fig. 5.

D'autres moyens ou d'autres organes appropriés peuvent être utilisés pour effectuer les mesures.

Ainsi que montré à la Fig. 5, ce gabarit 30 est formé par un support, de préférence en forme de croix comportant des branches 31 dont le nombre est égal au nombre de glissières 27 composant l'ensemble de maintien radial 10.

Ainsi dans l'exemple de réalisation représenté sur la Fig. 5, le nombre de branches 31 est égal à quatre et chaque branche 31 comporte à son extrémité libre une clavette 32 qui est fabriquée à l'image de celle des clavettes 15 de l'ensemble de maintien radial 10. Ainsi, chaque clavette 32 est fabriquée à l'identique des clavettes 15, tant d'un point de vue dimensionnel que géométrique.

Le gabarit 30 est par ailleurs équipé, au niveau de trois de ses clavettes 32, c'est à dire au niveau des clavettes 32 qui vont venir s'insérer dans les glissières 27 qui ne sont pas à réparer, d'équipements de mise en position et de mesure, non représentés, de la position du gabarit 30 par rapport à la cuve 1. Les quatre clavettes 32 du gabarit 30 sont initialement montées sur ce gabarit 30 avec du jeu de telle sorte qu'elles puissent s'adapter, en terme de positionnement au remplacement de n'importe quelle glissière 27 du support 26, donc au quatre orientations angulaires possible du gabarit dans la cuve 1.

Lorsque le gabarit 30 est en position au niveau des glissières 27 du support 26, ce gabarit 30 est bridé et on relève sa position angulaire et verticale par rapport à la cuve 1 et cela, au niveau des trois glissières 27 qui ne sont pas à remplacer. On effectue également une mesure relative de la position de la glissière 27 à réparer par rapport aux autres glissières 27 de l'ensemble de maintien 10. Ces différentes mesures servent de référence pour une prochaine introduction du gabarit 30 dans la cuve 1. Les clavettes 32 du gabarit 30 sont bridées et le resteront jusqu'à la fin des opérations de remplacement de la glissière 27 à réparer.

A l'aide d'outils de mesure appropriés et de type connu, non représentés, portés par la clavette 32 du gabarit 30 correspondant à la glissière 27 à réparer, on mesure l'écartement "a" entre les portées 27c des branches latérales 27b de la glissière 27 à réparer (Fig. 4).

Après avoir effectué ces différentes mesures, le gabarit 30 est retiré.

Ensuite, les deux branches latérales 27b de la glissière 27 à réparer sont découpées, de préférence par électroérosion, dans l'angle de la section en U de la glissière 27 à réparer et ces deux branches latérales 27b sont retirées, ainsi que montré à la Fig. 6. Chacune de ces branches latérales 27b à remplacer est mesurée et, en particulier, les épaisseurs de ces branches sont mesurées en dehors des zones usées et chacune des branches latérales 37b de remplacement est usinée respectivement à cotes identiques.

Les branches latérales 37b de remplacement sont montées dans le logement correspondant du support massif 26 et elles sont fixées.

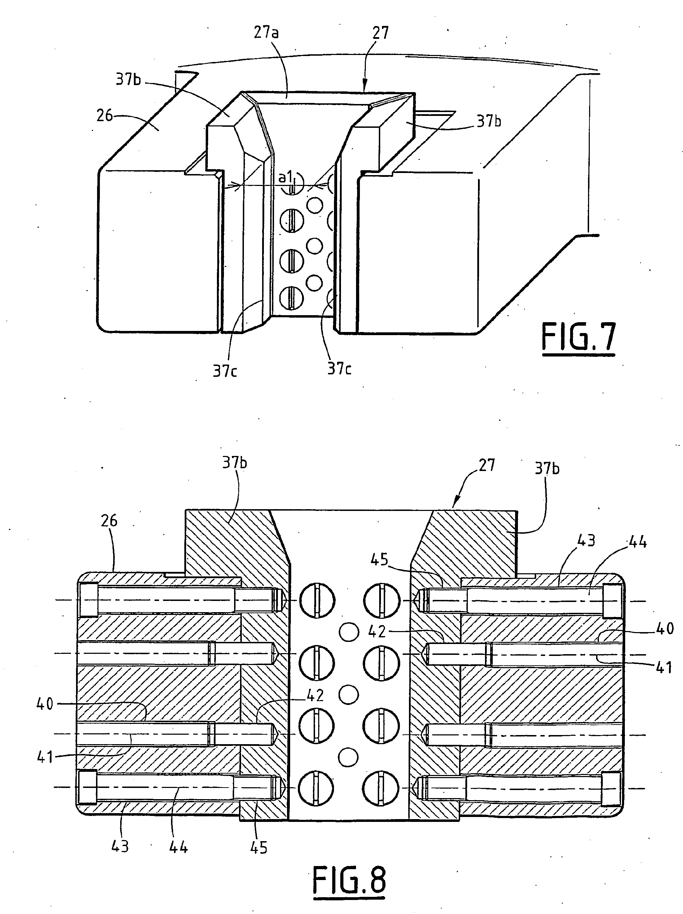

Pour cela et comme montré à la Fig. 8, le support massif 26 est percé de trous 40 débouchant destinés à recevoir des broches 41 de positionnement et de reprise d'efforts ainsi que de trous 43 débouchant pour des organes de vissage 44. De même, chacune des branches latérale 37b de remplacement est percée de trous, respectivement 42, pour les broches 41, et 45 pour les organes de vissage 44.

Le perçage des trous 43 et 45 respectivement dans le support massif 26 et dans chacune des branches latérales 37b de remplacement peut être effectué selon différentes procédures. -

Selon une procédure préférentielle, on perce dans le support massif 26, les trous 43 débouchants destinés à recevoir les organes de vissage 44 et on perce les trous 45 dans chacune des branches latérales 37b de remplacement, puis on taraude ces trous 45 pour les organes de vissage 44. Ensuite, on fixe chacune des branches latérales 37b de remplacement dans le logement du support massif 26 par les organes de vissage 44.

Selon une première variante de procédure, après le perçage des trous 43 du support massif 46 pour les organes de vissage 44, on bride chacune des branches latérales 37b de remplacement dans le logement de ce support massif 26, puis on perce les trous 45 dans chacune des branches latérales 37b de remplacement pour lesdits organes de vissage 44. Ensuite, on taraude les trous 45 dans chacune des branches latérales 37b de remplacement et on fixe ces branches latérales 37b de remplacement par les organes de vissage 44 dans le logement du support massif 26.

Selon une seconde variante de procédure, on effectue séparément les perçages des trous 43 du support massif 26 et des trous 45 de chacune des branches latérales 37b de remplacement destinés à recevoir des organes de vissage 44. Ensuite, on bride les branches latérales 37b de remplacement dans le logement du support massif 26, on taraude les trous 45 de chacune des branches latérales, 37b de remplacement et on fixe ces branches latérales 37b par les organes de vissage 44.

Après avoir fixé ces branches latérales 37b de remplacement, on réintroduit dans la cuve 1 le gabarit 30 et on le positionne de manière identique à sa première introduction et, cela, grâce aux mesures initiales effectuées.

Ensuite, on effectue par les organes de mesure portés par le gabarit 30, la mesure de l'écartement a₁ entre les portées 37c des branches latérales 37b de remplacement (Fig. 7). On compare la mesure de l'écartement "a" avec l'écartement "a₁" et on vérifie que les valeurs sont semblables et sont conformes aux valeurs théoriques.

Le contrôle du bon montage de la ou des branches latérales 37b de remplacement doit se faire à un stade intermédiaire, c'est à dire lorsque la ou les branches latérales 37b sont fixées par les organes de vissage 44, mais avant que les broches 41 soient posées. En effet, si le contrôle conduit à démonter la ou les branches 37b pour un réusinage, seuls les organes de vissage 44 doivent être retirés. Un contrôle final est indispensable pour valider l'état final de la réparation.

Si c'est le cas, on retire le gabarit 30 de la cuve 1. Dans le cas contraire, il faut envisager le réusinage de l'une ou des deux nouvelles branches latérales 37b ou l'usinage d'au moins une autre branche latérale 37b. On effectue également une mesure relative de la position de la glissière 27 réparée par rapport aux autres glissières 27.

Après validation de la réparation, les broches de positionnement 41 sont mises en place.

Dans le cas de réparations successives de plusieurs glissières 27, le gabarit 30 entre chaque réparation est pivoté de 90°, 180° ou 270° pour que la clavette 32 destinée à effectuer les mesures, soit toujours introduite dans la glissière 27 dont l'une ou les deux branches latérales 27b sont à réparer. Les quatre clavettes 32 du gabarit 30 sont débridées de ce gabarit 30 en fin de réparation de chaque glissière et sont bridées sur ce dernier, dans la position voulue au début de chaque réparation.

Le gabarit 30 permet de mesurer simultanément la distance entre les portées en vis à vis de deux branches latérales ce qui permet de remplacer les deux branches latérales simultanément, diminuant ainsi le nombre d'opérations à effectuer.

Les différentes opérations de mesure peuvent être effectuées, sans sortir du cadre de l'invention, par tout autre appareil approprié, comme par exemple au moyen d'un faisceau laser. Dans ce cas, la succession des différentes opérations est identique à celle précédemment décrite en remplaçant le gabarit par un appareil de mesure approprié.

D'une manière générale, la section des branches latérales de remplacement peut être trapézoïdale, c'est à dire identique à la branche latérale à remplacer ou, de préférence, carrée ou rectangulaire. Dans le cas de branches latérales de remplacement à section carrée ou rectangulaire, seules les cotes "utiles" d'épaisseur sont à l'identique avec les anciennes branches.

Le procédé selon l'invention permet donc de réparer une ou plusieurs glissières d'un ensemble de maintien radial d'une plaque de support de coeur d'un réacteur nucléaire à eau pressurisée, de manière précise et en respectant les jeux, sans qu'un opérateur ne pénètre à l'intérieur de la cuve du réacteur nucléaire.

## Revendications

1. Procédé de réparation des glissières (27) d'un ensemble (10) de maintien radial d'une plaque de support de coeur (5) d'un réacteur nucléaire à eau pressurisée, chaque glissière (27) de section en U étant fixée dans un logement ménagé dans un support massif (26) solidaire de la cuve (1) du réacteur et comportant deux branches latérales (27b) sensiblement parallèles et munies de portées (27c) en vis à vis destinées à coopérer avec les faces latérales d'une clavette (15) de maintien radial fixée sur la plaque de support de coeur (5), **caractérisé en ce que** :
- on mesure l'écartement entre les portées (27c) des branches latérales (27b) d'au moins une glissière (27) à réparer,
- on effectue une mesure relative de la position de ladite au moins glissière (27) à réparer par rapport aux autres glissières (27) de l'ensemble de maintien (10),
- on coupe et on enlève au moins une branche latérale (27b) de ladite au moins glissière (27) à réparer,
- on mesure les dimensions de ladite au moins branche latérale (27b) et on usine à cotes identiques au moins une branche latérale (37b) de remplacement,
- on perce dans le support massif (26) des trous (43) débouchant destinés à recevoir des organes de vissage (44) de ladite au moins branche latérale (37b) de remplacement,
- on perce des trous (45) dans ladite au moins branche latérale (37b) de remplacement et on taraude ces trous (45) pour les organes de vissage (44),
- on fixe ladite branche latérale (37b) de remplacement dans le logement du support massif (26) par les organes de vissage (44),
- on mesure l'écartement entre les portées (37c) des branches latérales (37b) d'au moins une glissière (27) réparée,
- on effectue une mesure relative de la position de ladite au moins glissière (27) réparée par rapport aux autres glissières (27) de l'ensemble de maintien (10),
- on perce des trous (40, 42) dans le support massif (26) et dans ladite au moins branche latérale (37b) de remplacement pour des broches (41) de positionnement et de reprise de l'effort, et
- on met en place lesdites broches (41).

2. Procédé selon la revendication 1, **caractérisé en ce qu'**on coupe ladite au moins branche latérale (27b) dans l'angle de la section en U de la glissière (27) à réparer.

3. Procédé selon la revendication 1 ou 2, **caractérisé en ce qu'**on coupe ladite au moins branche latérale (27b) par électroérosion.

4. Procédé selon l'une quelconque des revendications 1 à 3, **caractérisé en ce que**, après le perçage des trous (43) du support massif (26), on bride ladite branche latérale (37b) de remplacement dans le logement de ce support massif (26), on perce les trous (45), on taraude ces trous (45) et on fixe ladite branche latérale (37B) de remplacement par les organes de vissage (44).

5. Procédé selon l'une quelconque des revendications 1 à 3, **caractérisé en ce que** on effectue séparément le perçage des trous (43) du support massif (26) et des trous (45) de ladite au moins branche latérale ( 37b) de remplacement, on bride ladite branche latérale (37b) de remplacement dans le logement du support massif (26), on taraude ces trous (45) et on fixe ladite branche latérale (37b) de remplacement par les organes de vissage (44).

6. Procédé selon l'une quelconque des revendications 1 à 5, **caractérisé en ce que**, pour effectuer les mesures de l'écartement entre les portées (27c ; 37c) de ladite au moins glissière (27) à réparer et réparée et de la position de cette glissière (27) avant et après son remplacement, on utilise un gabarit (30) muni pour chacune des glissières (27) de l'ensemble de maintien (10) d'une clavette (32) identique à la clavette (15) de la plaque de support de coeur (5).

7. Procédé selon la revendication 6, **caractérisé en ce qu'**on équipe au moins une clavette (32) du gabarit (30) correspondant à une glissière (15) à ne pas remplacer d'équipements de mise en position et de mesure de la position du gabarit (30) par rapport à la cuve (1) du réacteur nucléaire.

## Claims

1. Method for repairing sliding members (27) of an assembly (10) for radial retention of a core support plate (5) of a pressurised water nuclear reactor, each sliding member (27) having a U-shaped cross-section being fixed in a housing which is provided in a solid support (26) which is fixedly joined to the vessel (1) of the reactor and which comprises two lateral branches (27b) which are substantially parallel and which are provided with mutually opposing seats (27c) which are intended to co-operate with the lateral faces of a radial retention key (15) which is fixed to the core support plate (5), **characterised in that**:
- the spacing is measured between the seats (27c) of the lateral branches (27b) of at least one sliding member (27) to be repaired,
- a relative measurement is carried out for the position of the at least one sliding member (27) to be repaired relative to the other sliding members (27) of the retention assembly (10),
- at least one lateral branch (27b) is cut and removed from the at least one sliding member (27) to be repaired,
- the dimensions of the at least one lateral branch (27b) are measured and at least one replacement lateral branch (37b) is machined to identical dimensions,
- there are drilled in the solid support (26) through-holes (43) which are intended to receive screwing means (44) of the at least one replacement lateral branch (37b),
- holes (45) are drilled in the at least one replacement lateral branch (37b) and these holes (45) are tapped for the screwing means (44),
- the replacement lateral branch (37b) is fixed in the housing of the solid support (26) by the screwing means (44),
- the spacing is measured between the seats (37c) of the lateral branches (37b) of at least one repaired sliding member (27),
- a relative measurement is carried out of the position of the at least one repaired sliding member (27) relative to the other sliding members (27) of the retention assembly (10),
- holes (40, 42) are drilled in the solid support (26) and in the at least one replacement lateral branch (37b) for positioning and force absorption pins (41), and
- the pins (41) are positioned.

2. Method according to claim 1, **characterised in that** the at least one lateral branch (27b) is cut in the angle of the U-shaped cross-section of the sliding member (27) to be repaired.

3. Method according to claim 1 or claim 2, **characterised in that** the at least one lateral branch (27b) is cut by means of electroerosion.

4. Method according to any one of claims 1 to 3, **characterised in that**, after the holes (43) of the solid support (26) have been drilled, the lateral replacement branch (37b) is flange-mounted in the housing of this solid support (26), the holes (45) are drilled, these holes (45) are tapped and the replacement lateral branch (37b) is fixed by the screwing means (44).

5. Method according to any one of claims 1 to 3, **characterised in that** the holes (43) of the solid support (26) and the holes (45) of the at least one replacement lateral branch (37b) are drilled separately, the replacement lateral branch (37b) is flange-mounted in the housing of the solid support (26), these holes (45) are tapped and the replacement lateral branch (37b) is fixed by the screwing means (44).

6. Method according to any one of claims 1 to 5, **characterised in that**, in order to carry out the measurements of the spacing between the seats (27c; 37c) of the at least one sliding member (27) which is to be repaired and which has been repaired and the position of this sliding member (27) before and after it has been replaced, a gauge (30) is used which is provided for each of the sliding members (27) of the retention assembly (10) with a key (32) which is identical to the key (15) of the core support plate (5).

7. Method according to claim 6, **characterised in that** at least one key (32) of the gauge (30) corresponding to a sliding member (15) which is not to be replaced is provided with equipment for positioning and measuring the position of the gauge (30) relative to the vessel (1) of the nuclear reactor.

## Patentansprüche

1. Verfahren zum Reparieren von Gleitschienen (27) einer Anordnung (10) zum radialen Halten einer Kernträgerplatte (5) eines Druckwasser-Kemreaktors, wobei jede Gleitschiene (27) mit U-förmigem Querschnitt in einem Aufnahmesitz fixiert ist, der in einem mit dem Tank (1) des Reaktors fest verbundenen massiven Träger (26) ausgebildet ist, und zwei seitliche Schenkel (27b) aufweist, die im Wesentlichen parallel sind und mit gegenüberliegenden Aufnahmeflächen (27c) versehen sind, die dazu bestimmt sind, mit den Seitenflächen eines Radialhaltekeils (15) zusammenzuwirken, der an der Kernträgerplatte (5) befestigt ist, **dadurch gekennzeichnet, dass**:
- der Abstand zwischen den Auflageflächen (27c) der seitlichen Schenkel (27b) wenigstens einer zu reparierenden Gleitschiene (27) gemessen wird,
- eine relative Messung der Position der wenigstens einen zu reparierenden Gleitschiene (27) in Bezug auf die anderen Gleitschienen (27) der Halteanordnung (10) ausgeführt wird,
- wenigstens ein seitlicher Schenkel (27b) der wenigstens einen zu reparierenden Gleitschiene (27) abgeschnitten und angehoben wird,
- die Abmessungen des wenigstens einen seitlichen Schenkels (27b) gemessen werden und wenigstens ein seitlicher Austauschschenkel (37b) mit identischen Maßen bearbeitet wird,
- in den massiven Träger (26) Mündungslöcher (43) gebohrt werden, die dazu bestimmt sind, Verschraubungsorgane (44) des wenigstens einen seitlichen Austauschschenkels (37b) aufzunehmen,
- Löcher (45) in den wenigstens einen seitlichen Austauschschenkel (37b) gebohrt werden und diese Löcher (45) für die Verschraubungsorgane (44) mit Gewinden versehen werden,
- der seitliche Austauschschenkel (37b) in dem Aufnahmesitz des massiven Trägers (26) durch die Verschraubungsorgane (44) befestigt wird,
- der Abstand zwischen den Auflageflächen (37c) der seitlichen Schenkel (37b) wenigstens einer reparierten Gleitschiene (27) gemessen wird,
- eine relative Messung der Position der wenigstens einen reparierten Gleitschiene (27) in Bezug auf die anderen Gleitschienen (27) der Halteanordnung (10) ausgeführt wird,
- Löcher (40, 42) in den massiven Träger (26) und in den wenigstens einen seitlichen Austauschschenkel (37b) für Positionierungs- und Kraftaufnahmestifte (41) gebohrt werden und
- die Stifte (41) angeordnet werden.

2. Verfahren nach Anspruch 1, **dadurch gekennzeichnet, dass** der wenigstens eine seitliche Schenkel (27b) in der Ecke des U-förmigen Querschnitts der zu reparierenden Gleitschiene (27) abgeschnitten wird.

3. Verfahren nach Anspruch 1 oder 2, **dadurch gekennzeichnet, dass** der wenigstens eine seitliche Schenkel (27b) durch Elektroerrosion abgeschnitten wird.

4. Verfahren nach einem der Ansprüche 1 bis 3, **dadurch gekennzeichnet, dass** nach dem Bohren der Löcher (43) des massiven Trägers (26) der seitliche Austauschschenkel (37b) in dem Aufnahmesitz dieses massiven Trägers (26) festgeklemmt wird, die Löcher (45) gebohrt werden, diese Löcher (45) mit Gewinden versehen werden und der seitliche Austauschschenkel (37b) durch die Verschraubungsorgane (44) befestigt wird.

5. Verfahren nach einem der Ansprüche 1 bis 3, **dadurch gekennzeichnet, dass** das Bohren der Löcher (43) des massiven Trägers (26) und der Löcher (45) des wenigstens einen seitlichen Austauschschenkels (37b) getrennt ausgeführt wird, dass der seitliche Austauschschenkel (37b) in dem Aufnahmesitz des massiven Trägers (26) festgeklemmt wird, dass diese Löcher (45) mit Gewinden versehen werden und dass der seitliche Austauschschenkel (37b) durch die Verschraubungsorgane (44) befestigt wird.

6. Verfahren nach einem der Ansprüche 1 bis 5, **dadurch gekennzeichnet, dass** für die Ausführung der Messungen des Abstands zwischen den Auflageflächen (27c; 37c) der wenigstens einen zu reparierenden bzw. reparierten Gleitschiene (27) und der Position dieser Gleitschiene (27) vor und nach ihrem Austausch eine Schablone (30) verwendet wird, die für jede der Gleitschiene (27) der Halteanordnung (10) mit einem Keil (37) versehen ist, der mit dem Keil (15) der Kernträgerplatte (5) übereinstimmt.

7. Verfahren nach Anspruch 6, **dadurch gekennzeichnet, dass** wenigstens ein Keil (32) der Schablone (30), der einer nicht auszutauschenden Gleitschiene (15) entspricht, mit Anlagen zum Positionieren und Messen der Position der Schablone (30) in Bezug auf den Tank (1) des Kernreaktors versehen wird.
